# EUROPÄISCHE PATENTSCHRIFT

(11) **EP 4 298 886 B1**
(45) Veröffentlichungstag und Bekanntmachung des Hinweises auf die Patenterteilung: **12.08.2026**
(21) Anmeldenummer: 23180637.3
(22) Anmeldetag: 21.06.2023
(51) Int. Cl.: A01D 34/416, D01F 8/02, D01F 8/14

(54) **BIOLOGISCH ABBAUBARER MÄHFADEN**
BIODEGRADABLE MOWING YARN
FIL DE COUPE BIODÉGRADABLE

(30) Priorität: 30.06.2022 EP 22182149
(43) Veröffentlichungstag der Anmeldung: 03.01.2024
(73) Patentinhaber: Hubschmid, Fabian, 8733 Eschenbach (CH)
(72) Erfinder: Hubschmid, Fabian, 8733 Eschenbach (CH)
(74) Vertreter: E. Blum & Co. AG

(56) Entgegenhaltungen:
- EP-A1- 2 842 406
- DE-A1- 102020 124 303
- DE-T2- 69 800 555
- DE-T2- 69 805 027
- JP-A- H05 328 821

## Beschreibung

### Gebiet der Erfindung

Die Erfindung betrifft einen Mähfaden, einen Freischneider, sowie ein Verfahren zur Herstellung eines Mähfadens.

### Hintergrund

Freischneider oder Trimmer sind motorbetriebene Geräte zum Mähen von Gras oder anderen Pflanzen. Hierbei wird ein Mähkopf durch einen Elektro- oder Verbrennungsmotor angetrieben und in Rotation versetzt. Ein mit dem Mähkopf verbundenes Schneidmittel rotiert infolge dessen mit hoher Drehzahl und schneidet das Gras ohne Gegenschneide oder Gegenlager. Das Schneidmittel kann eine Messerscheibe oder ein anders geformtes Messer sein, oder aber ein in einem Fadenkopf gelagerter Faden.

Gewöhnlich wird ein Faden aus Nylon verwendet. Ein Nylonfaden weist eine für das Mähen ideale geringe Sprödigkeit auf wie auch eine nicht zu grosse Flexibilität. Nylon ist jedoch eine synthetische Faser, welche nicht biologisch abbaubar ist. Andererseits können Nylonfäden während des Mähens reissen oder zerstückeln. Es ist davon auszugehen, dass Bestandteile solcher gerissener Nylonfäden in der Natur / Wiese verbleiben, da sie entweder nicht ohne Weiteres auffindbar sind oder nicht aufgenommen und entsorgt werden.

Die DE 10 2020 124303A1 zeigt eine Aufleitschnur zur Anwendung in Gartenbau und Landwirtschaft, wobei die Aufleitschnur gemäß DIN EN 13 432 biologisch abbaubar ist und aus cellulosischen Garnen besteht, gekennzeichnet dadurch, dass es sich bei den cellulosischen Garnen um Multifilamentgarne handelt.

In der JP H05 328821 A ist die Bereitstellung eines Mähbandes für eine Schneide- und Reinigungsmaschine offenbart.

Der Schneidfaden aus der DE 698 00 555 T2 weist einen monofilen oder multifilen Kern aus einem synthetischen Material mit hoher Festigkeit und Zugfestigkeit auf.

Die EP 2 842 406 A1 zeigt ein Verfahren zur Herstellung einer biologisch abbaubaren Zusammensetzung auf Polyamidbasis, die im Wesentlichen gleichmäßig in einer Polyamid-Matrix dispergiertes Glycin enthält.

Die DE 698 05 027 T2 offenbart einen Schneidfaden für ein Werkzeug mit rotierendem Kopf.

### Darstellung der Erfindung

Aufgabe der Erfindung ist es deshalb, einen biologisch abbaubaren Mähfaden bereitzustellen, welcher nach einem allfälligen Lösen vom Fadenkopf in der Natur verbleiben und sich dort zersetzen kann.

Diese Aufgabe wird gelöst durch die Merkmale des Patentanspruchs 1.

Es wird ein Mähfaden mit einem Kern vorgeschlagen, welcher Kern eine Bastfaser oder eine biologisch abbaubare Chemiefaser aufweist. Der Mähfaden weist ferner eine Ummantelung um den Kern auf, welche Ummantelung einen biologisch abbaubaren Kunststoff enthält.

Bastfasern sind typischerweise zusammengesetzte Fasern aus dem Bast einer Pflanze, sind also den Pflanzenfasern und damit den Naturfasern zuzurechnen. Unter Bast wird das lebende Gewebe unter der Borke von Bäumen und anderen Pflanzen verstanden.

Bevorzugt ist die für den Kern verwendete Bastfaser eine Hanffaser. In einer anderen Weiterbildung ist die für den Kern verwendete Bastfaser eine Flachsfaser.

Im Kontext von Fasern umfasst der verwendete Singular selbstverständlich auch den Plural: Die Herstellung aus bzw. das Aufweisen einer Bastfaser umfasst also auch die Herstellung aus Bastfasermaterial und damit im Ergebnis auch einen Kern hergestellt aus und/oder bestehend aus und/oder umfassend eine Vielzahl von Bastfasern. Gleiches gilt für die biologisch abbaubare Chemiefaser.

Vorzugsweise sind die einzelnen Fasern miteinander verdrillt oder miteinander verflochten oder in eine weitere Faser oder sonstige Bestandteile des Kerns eingeflochten.

In einer anderen Weiterbildung der Erfindung ist die für den Kern verwendete Faser keine Naturfaser sondern eine biologisch abbaubare Chemiefaser.

Chemiefasern sind Kunstfasern, die künstlich mit Hilfe eines chemisch-technischen Verfahrens hergestellt werden, bevorzugt aus Polymeren. Bevorzugt werden im vorliegenden Fall Kunstfasern aus natürlichen Polymeren für den Kern des Mähfadens verwendet, bevorzugt Fasern aus regenerierter Cellulose. Insbesondere enthält der Kern also Lyocell-Fasern. Lyocell (CLY) wird beispielsweise unter dem Markennamen TENCEL^{™} der Lenzing AG vertrieben, welches Produkt auch vorliegend verwendet werden kann. Bevorzugt wird Lyocell verwendet mit 1.3 dtex, +/- 10%.

Lyocell ist eine biologisch abbaubare Faser. Unter einer biologisch abbaubaren Chemiefaser oder einem biologisch abbaubaren Kunststoff versteht man eine Faser bzw. einen Kunststoff, die/der durch Mikroorganismen mittels Enzymen abgebaut, also innerhalb einer bestimmten Zeitspanne zersetzt wird. Angaben für die biologische Abbaubarkeit von Lyocell reichen von 75% innerhalb von 60 Tagen bis 100% innerhalb von 16 Wochen.

Grundsätzlich darf ein Mähfaden einerseits nicht zu spröde sein, andererseits nicht zu flexibel. Sprödigkeit bezeichnet das Bruchverhalten als Eigenschaft eines Werkstoffes. Je spröder ein Werkstoff, desto leichter geht er zu Bruch, mit nur geringer vorgängiger plastischer Verformung. Spröde Werkstoffe zeichnen sich daher üblicherweise durch eine geringe Duktilität aus. Flexible Werkstoffe dagegen zeichnen sich üblicherweise durch eine hohe Duktilität aus, d.h. sie können eine hohe Verformungsenergie aufnehmen, bevor sie zu Bruch gehen. Im Kontext des Mähens ist der alleinige Einsatz von Bastfasern oder biologisch abbaubaren Chemiefasern wie das bevorzugte Lyocell nicht möglich, da diese Fasern zu weich und damit zu flexibel für diese Anwendung sind. Eine Schneidwirkung würde sich entweder gar nicht oder nur in geringem Masse einstellen.

Biologisch abbaubare Bastfasern oder Kunstfasern, würden sie alleine als Mähfaden eingesetzt werden, erfüllen also nicht die an einen Mähfaden gestellte Anforderung nach ausreichender Steifigkeit. Ein weiterer Nachteil der hohen Flexibilität dieser Fasern ist, dass bei hohen Drehzahlen beim Mähen aufgrund der hohen Zentrifugalkräfte und der Krafteinwirkung auf den Mähfaden durch das Mähgut die Faserstruktur aufgebrochen wird und die typischerweise gedrillte oder eingeflochtene oder verflochtene Faser ausfranst.

Insofern ist eine Ummantelung für den Kern vorgesehen, welche Ummantelung den Kern bevorzugt radial vollständig umschliesst, und bevorzugt den Kern kontaktbehaftet umschliesst, bevorzugt mikroskopisch mit diesem verzahnt ist. Die Ummantelung weist einen biologisch abbaubaren Kunststoff auf, oder besteht aus einem biologisch abbaubaren Kunststoff. Dieser biologisch abbaubare Kunststoff sorgt für eine ausreichende Steifigkeit des Mähfadens, insbesondere eine ausreichende Biege- und Schubsteifigkeit. In diesem Sinne ist es bevorzugt, dass die Ummantelung eine Biege- und / oder Schubsteifigkeit aufweist grösser als die Biege- und / oder Schubsteifigkeit der Bastfaser oder der biologisch abbaubaren Chemiefaser.

Biologisch abbaubare Kunststoffe, würden sie alleine als Mähfaden eingesetzt werden, erfüllen typischerweise nicht die an einen Mähfaden gestellte Anforderung nach ausreichender Zugfestigkeit. Bei hohen Drehzahlen beim Mähen würde sich ein solcher Mähfaden aufgrund der hohen Zentrifugalkräfte dehnen. In Kombination mit der durch das Mähgut auf den Mähfaden einwirkenden Krafteinwirkung würde ein solcher Kunststoff zu spröde sein und damit leicht brechen.

Hiergegen wirkt bei einer Kern / Ummantelung - Kombination wie oben vorgeschlagen wiederum der Faser-Kern. Bastfasern oder Kunstfasern wie das oben genannte bevorzugte Lyocell zeichnen sich durch eine hohe Zugfestigkeit aus, welche ihrerseits infolge der mechanischen Kopplung zwischen Kern und Ummantelung die Zugfestigkeit für den Mähfaden insgesamt dominiert. Diese mechanische Kopplung wird, wie weiter unten noch näher beschrieben, vorzugsweise dadurch erreicht, dass der Kunststoff für die Ummantelung in flüssiger oder plastischer Phase an den Kern herangeführt wird und aushärtet, während sie den Faser-Kern umschliesst. Hierdurch sind Kunststoff-Mantel und Faser-Kern mechanisch eng verzahnt, sodass die Steifigkeit des Mähfadens im Wesentlichen durch die Steifigkeit der Ummantelung bestimmt ist, die Zugfestigkeit des Mähfadens dagegen im Wesentlichen durch die Zugfestigkeit des Kerns bestimmt ist. Insofern ist der vorliegende Mähfaden sowohl zugfest als auch ausreichend steif.

Andererseits wird aber insgesamt ein biologisch abbaubarer Mähfaden bereitgestellt, dessen Materialien für den Kern und die Ummantelung jeweils für sich und in Summe biologisch abbaubar und vorzugsweise auch kompostierbar sind.

In einer Weiterbildung ist der Kern aus einer Bastfaser hergestellt, besteht also aus einer Bastfaser. Vorzugsweise ist der Kern aus Hanffasern hergestellt, besteht also aus Hanffasern. Alternativ ist der Kern vorzugsweise aus Flachsfasern hergestellt, besteht also aus Flachsfasern.

Alternativ ist der Kern vorzugsweise aus einer biologisch abbaubaren Chemiefaser hergestellt, besteht also aus der biologisch abbaubaren Chemiefaser. Der Kern kann dabei aus einer der folgenden biologisch abbaubaren Chemiefasern hergestellt sein, also daraus bestehen: Lyocellfasern, Polyactidfasern, Cellulosefasern, Ligninfasern, Viskosefasern.

In einer Variante können auch zwei oder mehr der vorgenannten Chemie- oder Bastfasern zu einem Kern kombiniert werden, oder zu einem Bestandteil des Kerns kombiniert werden, dem ein oder mehrere weitere Bestandteile hinzugefügt werden.

Der Kern umfasst zusätzlich zur Bastfaser und/oder zur biologisch abbaubaren Chemiefaser eine zusätzliche Faser aus einem biologisch abbaubaren Kunststoff. Weist der Kern eine biologisch abbaubare Chemiefaser auf, so ist die zusätzliche Faser ein anderer Kunststoff als derjenige der biologisch abbaubaren Chemiefaser. Vorzugsweise weist der biologisch abbaubare Kunststoff für die zusätzliche Faser einen geringeren Schmelzpunkt auf als das Material für die biologisch abbaubare Chemiefaser.

Besonders bevorzugt ist der biologisch abbaubare Kunststoff für die zusätzliche Faser derselbe, aus dem auch die Ummantelung hergestellt ist, oder den die Ummantelung aufweist. Hintergrund für diese Weiterbildung ist, dass durch diese Massnahme die Verbindung zwischen Kern und Ummantelung erhöht wird, Bestandteile des Kerns und die Ummantelung teilweise verschmelzen. Wird der Kunststoff für die Ummantelung in erhitztem Zustand auf den Kern aufgebracht, so werden auch die zusätzlichen Fasern im Kern erwärmt und verschmelzen mitunter mit der Ummantelung und / oder binden besser an die übrigen Fasern des Kerns an. Hierdurch wird eine Verankerung der Ummantelung im Kern erreicht, quasi eine chemische Verbindung der Ummantelung mit dem Kern, oder ein Verzahnen. Dadurch kann sich die Ummantelung nur schwer vom Kern lösen, weder beim Mähvorgang, noch bei einem allfälligen Schneiden des Mähfadens bei seiner Herstellung.

Vorzugsweise weist die zusätzliche Kunststoff-Faser aus biologisch abbaubarem Kunststoff Polylactide (PLA) auf, oder besteht aus PLA. Vorzugsweise ist die Chemiefaser aus Lyocell und die zusätzliche Kunststoff-Faser aus PLA, vorzugsweise in einem Verhältnis von 70% Lyocell und 30% PLA, und vorzugsweise in Kombination mit einer Ummantelung, welche PLA enthält. Auch kann die zusätzliche Kunststoff-Faser aus einem der Materialien PLA, PBS, TPS, PBAT, PHA, PHB, PCL, Lignin bestehen, bevorzugt in Kombination mit demselben Material zumindest als Bestandteil der Ummantelung.

Es weist also der Kern zumindest eine Bast- oder Chemiefaser auf, sowie eine zusätzliche Faser aus Kunststoff. Dabei ist es bevorzugt, dass die zusätzliche Faser mit der Bastfaser oder mit der biologisch abbaubaren Chemiefaser verzwirnt ist, also verdrillt oder verflochten ist. Vorzugsweise ist der (Volumen-)Anteil der zusätzlichen Faser zur Bastfaser oder zur biologisch abbaubaren Chemiefaser im Verhältnis kleiner oder gleich 1:1, bevorzugt kleiner oder gleich 1:2**.** Ein solches Verhältnis reicht aus, um eine starke Anbindung der Ummantelung an die übrigen Bast- oder Chemiefasern zu erwirken. Ein solcher Anteil der Chemie- oder Bastfaser gewährleistet andererseits die Dominanz ihrer Eigenschaften im Verbund hinsichtlich Zugfestigkeit.

Bevorzugt enthält die Ummantelung ein biologisch abbaubares Polymermaterial, oder ist aus einem biologisch abbaubaren Polymermaterial hergestellt und besteht damit daraus. Bevorzugt ist das Polymermaterial ein biologisch abbaubarer Polymer-Compound bestehend aus mehreren Kunststoffen, bevorzugt aus mehreren biologisch abbaubaren Kunststoffen.

Vorzugsweise weist das Material der Ummantelung Biopolymere auf, vorzugsweise Polylactide (PLA). Bevorzugt ist die Ummantelung aus Biopolymeren, wie Polylactiden (PLA) hergestellt und besteht damit daraus.

Vorzugsweise weist das Material der Ummantelung Polybutylensuccinat (PBS) auf. Bevorzugt ist die Ummantelung aus Polybutylensuccinat (PBS) hergestellt und besteht damit daraus.

Vorzugsweise weist das Material der Ummantelung thermoplastische Stärke (TPS) auf. Bevorzugt ist die Ummantelung aus thermoplastischer Stärke (TPS) hergestellt und besteht damit daraus.

Vorzugsweise weist das Material der Ummantelung Polybutylenadipat-terephthalat (PBAT) auf. Bevorzugt ist die Ummantelung aus Polybutylenadipat-terephthalat (PBAT) hergestellt und besteht damit daraus.

Vorzugsweise weist das Material der Ummantelung Lignin auf. Bevorzugt ist die Ummantelung aus Lignin hergestellt und besteht damit daraus.

Vorzugsweise weist das Material der Ummantelung Polyhydroxyalkanoate (PHA) auf. Bevorzugt ist die Ummantelung aus Polyhydroxyalkanoate (PHA) hergestellt und besteht damit daraus.

Vorzugsweise weist das Material der Ummantelung Polyhydroxybuttersäure (PHB) auf. Bevorzugt ist die Ummantelung aus Polyhydroxybuttersäure (PHB) hergestellt und besteht damit daraus.

Vorzugsweise weist das Material der Ummantelung Polycaprolacton (PCL) auf. Bevorzugt ist die Ummantelung aus Polycaprolacton (PCL) hergestellt und besteht damit daraus.

Vorzugsweise weist die Ummantelung einen Polymer-Compound auf, enthaltend mindestens zwei, bevorzugt genau zwei, der folgenden Materialien: PLA, PBS, TPS, PBAT, PHA, PHB, PCL, Lignin.

Vorzugsweise weist die Ummantelung einen Polymer-Compound auf, enthaltend mindestens drei, bevorzugt genau drei, der folgenden Materialien: PLA, PBS, TPS, PBAT, PHA, PHB, PCL, Lignin.

Vorzugsweise weist die Ummantelung einen Polymer-Compound auf, enthaltend PLA und mindestens eine, bevorzugt genaue eine, der folgenden Materialien: PBS, TPS, PBAT, PHA, PHB, PCL, Lignin.

Vorzugsweise weist die Ummantelung einen Polymer-Compound auf, enthaltend PLA und mindestens zwei, bevorzugt genau zwei, der folgenden Materialien: PBS, TPS, PBAT, PHA, PHB, PCL, Lignin.

Vorzugsweise weist die Ummantelung einen Polymer-Compound auf, enthaltend PHA und mindestens eine, bevorzugt genaue eine, der folgenden Materialien: PBS, TPS, PBAT, PLA, PHB, PCL, Lignin.

Vorzugsweise weist die Ummantelung einen Polymer-Compound auf, enthaltend PHA und mindestens zwei, bevorzugt genau zwei, der folgenden Materialien: PBS, TPS, PBAT, PLA, PHB, PCL, Lignin.

Vorzugsweise weist die Ummantelung einen Polymer-Compound auf, enthaltend PHB und mindestens eine, bevorzugt genaue eine, der folgenden Materialien: PBS, TPS, PBAT, PLA, PHA, PCL, Lignin.

Vorzugsweise weist die Ummantelung einen Polymer-Compound auf, enthaltend PHB und mindestens zwei, bevorzugt genau zwei, der folgenden Materialien: PBS, TPS, PBAT, PLA, PHA, PCL, Lignin.

Vorzugsweise weist die Ummantelung einen Polymer-Compound auf, enthaltend PHA, PBS und mindestens eine, bevorzugt genaue eine, der folgenden Materialien: TPS, PBAT, PLA, PHB PCL, Lignin.

Vorzugsweise weist die Ummantelung einen Polymer-Compound auf, enthaltend mindestens, bevorzugt enthaltend genau, PLA, PBS und PBAT.

Vorzugsweise weist die Ummantelung einen Polymer-Compound auf, enthaltend mindestens, bevorzugt enthaltend genau, PHA, PBS und PCL.

In einer bevorzugten Weiterbildung der Erfindung ist der biologisch abbaubare Kunststoff Bio-Flex^{®} F 1804 der Firma FKUR, enthaltend PLA und weitere biologisch abbaubare Kunststoffkomponenten.

Dieser, oder auch ein anderer für die Ummantelung einsetzbarer Kunststoff ist bevorzugt extrudierfähig, da im Herstellungsprozess des Mähfadens bevorzugt ein Extrudierverfahren zum Anformen des Kunststoffs an den Kern zur Anwendung kommt. Insofern ist auch bevorzugt, dass das Kunststoffmaterial eine Schmelztemperatur grösser 100° C, vorzugsweise grösser 150° C aufweist, und somit in gewöhnlichen Extrudern verarbeitet werden kann.

Der Mähfaden hat vorzugsweise einen Durchmesser zwischen 1 mm und 4 mm**.** Hierbei beträgt die Schichtdicke der Ummantelung vorzugsweise zwischen 0.2 mm und 0.4 mm, und zwar unabhängig von dem Durchmesser des Mähfadens. Es wurde festgestellt, dass eine solche Schichtdicke der Ummantelung ausreicht, um den Kern wirksam zu schützen und gleichzeitig eine ausreichende Steifigkeit des Mähfadens sicherzustellen, unabhängig von einem Durchmesser des Kerns im Bereich zwischen 0.8 mm und 3.6 mm.

Gemäss einem weiteren Aspekt der vorliegenden Erfindung wird ein Freischneider vorgeschlagen, enthaltend einen Mähfaden nach einer der vorhergehenden Weiterbildungen. Ein Freischneider, auch Trimmer genannt, ist ein motorbetriebenes Gerät zum Mähen von Gras oder anderen Pflanzen. Hierbei wird ein Mähkopf durch einen Elektro- oder Verbrennungsmotor angetrieben und in Rotation versetzt. Vorliegend ist der Mähkopf bevorzugt ein Fadenkopf, an welchem der Mähfaden mit seinem einen Ende fixiert ist. Der Mähfaden rotiert infolge des Antriebs mit hoher Drehzahl und schneidet das Gras ohne Gegenschneide oder Gegenlager.

Gemäss einem weiteren Aspekt der vorliegenden Erfindung wird ein Verfahren zum Herstellen eines Mähfadens vorgeschlagen, bei dem zunächst ein Kern bereitgestellt wird, der zumindest eine Bastfaser oder eine biologisch abbaubare Chemiefaser aufweist. Vorzugsweise weist der Kern solche Fasern in gedrillter oder eingeflochtener oder verflochtener Form auf. Ein biologisch abbaubarer Kunststoff, aus dem die Ummantelung gebildet werden soll, wird erhitzt und extrudiert. Das Extrudat wird der Bastfaser oder der biologisch abbaubaren Chemiefaser zugeführt wird zum Anformen einer Ummantelung an den Kern. Als Extrudat wird das von einem Extruder abgegebene Material verstanden, aus dem die Ummantelung an den Kern angeformt wird. Bevorzugt kommt also bei diesem Verfahren ein Extruder zum Einsatz, beispielsweise ein Schnecken- oder ein Kolbenextruder, bei dem eine Schnecke oder ein Kolben zur Förderung des Extrudats dienen. Das extrudierfähige Ausgangsmaterial, eben der biologisch abbaubare Kunststoff, aus dem die Ummantelung hergestellt werden soll, wird diesem Extruder zugeführt, beispielsweise als Granulat. Der Extruder weist typischerweise eine Heizung auf zum Erhitzen dieses Ausgangsmaterials über seinen Schmelzpunkt, sodass als Extrudat der verflüssigte oder zumindest zähflüssige Kunststoff durch den Extruder-eigenen Fördermechanismus wie etwa die Schnecke zum Einsatzort gefördert wird. Der Einsatzort, z.B. definiert durch den Auslass des Extruders, ist bevorzugt eine stationäre Position, an der der Kern mit der Bastfaser oder der biologisch abbaubaren Chemiefaser vorbeigeführt wird. Hierzu wird der Kern translatorisch an der stationären Position vorbeigeführt, bevorzugt mit konstanter Geschwindigkeit. An der stationären Position am / in der Nähe des Auslasses des Extruders gerät also der Kern in Kontakt mit dem Extrudat. Vorzugsweise sind Anformmittel vorgesehen, welche dafür sorgen, dass das Extrudat in eine bestimmte Form bezüglich des Kerns gebracht wird. Ein solches Anformmittel kann beispielsweise eine Röhre umfassen, welche eine z.B. radial angeordnete Eintrittsöffnung an der stationären Position für das Extrudat aufweist. Das Extrudat fliesst an dieser Position also in das Innere der Röhre. Durch eine der Stirnöffnungen der Rühre wird dabei der Kern mittels der Fördermittel in das Innere der Röhre und insbesondere durch die Röhre geführt, bevorzugt in der Längsachse der Röhre. An der stationären Position wird also das Extrudat dem mit konstanter Geschwindigkeit vorbeigeführten Kern zugeführt, und durch die Röhre mit z.B. kreisrundem Querschnitt die Aussenform für die Ummantelung vorgegeben. Andere Aussenformen wie Quadrat, Dreieck, Sternform etc. sind vorstellbar. Das Extrudat wird bevorzugt anschliessend an das Anformmittel ausgehärtet. Hierbei wird vorzugsweise eine Wasserkühlung, d.h. eine Durchfuhr des Mähfadens durch ein Wasserbad, oder eine Luftkühlung eingesetzt, letztere mit einem Lüfter zum Beaufschlagen des Mähfadens mit kalter Luft. Damit ist die Ummantelung hergestellt und in einem festen Zustand. Bevorzugt greifen die Fördermittel am erstellten Mähfaden an, um seinen damals noch nicht ummantelten Kern am Auslass des Extruders vorbeizuführen. Bevorzugt umfasst das Fördermittel ein oder mehrere Abzugswalzen, welche an der erkalteten Ummantelung angreifen und damit auch den noch zu ummantelnden Kern von einer Abspulrolle abspulen und translatorisch, bevorzugt mit konstanter Geschwindigkeit am Extruder vorbeiführen oder durch den Extruder hindurchführen. Die Fördermittel können Führungsmittel enthalten wie Leitschienen, Unterstützungsrollen etc. Nach dem Fördermittel kann bevorzugt eine Schnittvorrichtung vorgesehen werden, die den Mähfaden in einer gewünschten Länge abschneidet. Alternativ kann der Mähfaden auf eine Aufrollspule aufgerollt werden, und erst später im Handel oder anderswo in der gewünschten Länge von der Aufrollspule abgeschnitten werden.

Der Kern weist eine zusätzliche Faser aus einem biologisch abbaubaren Kunststoff auf, etwa eine Faser aus dem gleichen Kunststoff wie die Ummantelung, so kann beispielsweise eine solche Faser durch Extrudieren aus dem entsprechenden Kunststoffgranulat hergestellt werden. Nach dem Extrudieren kann die zusätzliche Faser bevorzugt gereckt werden, d.h. bis kurz vor ihre Reissgrenze in Zugrichtung gedehnt werden. Dieser Vorgang erhöht die Zugfestigkeit der zusätzlichen Faser. Diese zusätzliche Faser wird mit den anderen am Kern beteiligten Fasern verdrillt oder verflochten.

Die Feststellung der biologischen Abbaubarkeit von Kunststoffen wird bevorzugt anhand von Prüfverfahren festgestellt. Das Prüfverfahren nach der Norm EN 13432 etwa stellt die biologische Abbaubarkeit von Kunststoff fest und erfordert beispielsweise, dass 90 % des organischen Materials nach 6 Monaten in einem wässrigen Medium/Umgebung in CO2 umgewandelt wurde. In einem weiteren Test gemäss dieser Norm kann auch die Kompostierbarkeit festgestellt werden: Nur wenn nach 3-monatiger Kompostierung und anschliessendem feinen Sieben von einem Kunststoff weniger als 10 % der Originalmasse verbleiben, gilt er als kompostierbar. Vorzugsweise sind die Chemiefaser, die zusätzliche Kunststofffaser des Kerns sowie das Material der Ummantelung nach dieser Norm biologisch abbaubar, vorzugsweise zusätzlich auch noch kompostierbar.

Die Normen EN 14995 und ASTM D6400 stellen ähnliche Prüfverfahren auf.

Es sind die Chemiefaser, die zusätzliche Kunststofffaser des Kerns sowie das Material der Ummantelung nach zumindest einer dieser Normen EN 13432, EN 14995 oder ASTM D6400 biologisch abbaubar, vorzugsweise nach allen drei Normen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 einen Mähfaden;
Figur 2 einen Mähfaden nach einem Ausführungsbeispiel der Erfindung;
Figur 3 ein Verfahren zur Herstellung eines Mähfadens, nach einem Ausführungsbeispiel der Erfindung.

### Detaillierte Beschreibung der Zeichnungen

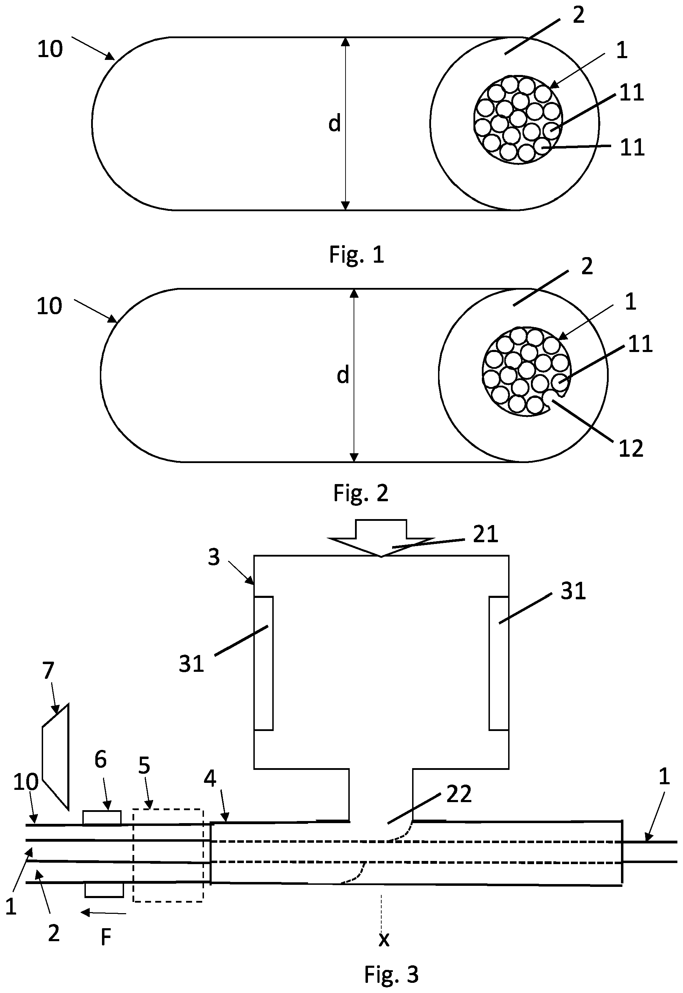

Figur 1 zeigt einen Mähfaden. Der Mähfaden 10 weist einen Kern 1 sowie eine Ummantelung 2 um den Kern 1 auf. Vorliegend sind Kern 1 und Ummantelung 2 jeweils von kreisrundem Querschnitt. Sie können jedoch auch anderen Querschnitt aufweisen.

Es ist schematisch angedeutet, dass der Kern 1 eine Bastfaser oder eine biologisch abbaubare Chemiefaser 11 enthält, bzw. eine Vielzahl solcher Fasern 11 aufweist. Die einzelnen Fasern 11 können dabei helixförmig einander umschlingen oder sind verwoben. Die Anzahl der einzelnen Fasern 11 ist nicht repräsentativ. Dargestellt ist der Kern 1 mit Lyocellfaser als biologisch abbaubare Chemiefasern. Die Ummantelung 2 um den Kern 1 ist aus einem biologisch abbaubaren Kunststoff.

Figur 2 zeigt einen Mähfaden nach einem Ausführungsbeispiel der Erfindung. Der Mähfaden 10 von Figur 2 unterscheidet sich vom Mähfaden nach Figur 1 darin, dass der Kern 1 zusätzliche Fasern 12 aus dem gleichen Material wie die Ummantelung 2 aufweist. Hierbei ist schematisch gezeigt, dass aufgrund des Aufschmelzens der zusätzlichen Faser 12 infolge der thermischen Bedingungen beim Aufbringen der Ummantelung 2 auf den Kern 1 diese Fasern 12 mit der Ummantelung 2 verschmelzen / verschweissen, also eine Einheit mit der Ummantelung 2 bilden. Dieser Effekt verstärkt die Bindung zwischen Ummantelung 2 und Kern 1.

Figur 3 zeigt schematisch ein Verfahren zur Herstellung eines Mähfadens, nach einem Ausführungsbeispiel der Erfindung. Bezugszeichen 3 zeigt einen Extruder, beispielsweise einen Schnecken oder einen Kolbenextruder, bei dem eine Schnecke oder ein Kolben zur Förderung des Extrudats dienen. Details wie Schnecke oder Kolben sind, mit Ausnahme einer Heizung 31 nicht in Figur 3 eingezeichnet. Der Extruder 3 wird mit einem extrudierfähigen Material, im vorliegenden Falle mit einem biologisch abbaubaren Kunststoff 21 befüllt. Dieser Kunststoff 21 wird durch die Heizung 31 über seinen Schmelzpunkt erhitzt, und mittels eines Fördermittels des Extruders, eben der Schnecke oder dem Kolben in seinem weichen oder flüssigen Zustand als Extrudat 22 einem Anformmittel 4 zugeführt.

Das Anformmittel 4 ist vorliegend eine Röhre, welche eine Eintrittsöffnung an der stationären Position x für das Extrudat 22 aufweist. Das Extrudat 22 fliesst an dieser Position x also in das Innere der Röhre. Über ein nicht eingezeichnetes Fördermittel wird der Röhre der spätere Kern 1 des Mähfadens zugeführt, also entweder eine Bastfaser oder eine biologisch abbaubare Chemiefaser. Die Zufuhr in die Röhre / das Anformmittel 4 erfolgt dabei bevorzugt kontinuierlich, z.B. von eine Abspulrolle für die Bast- oder Chemiefaser. Als Fördermittel / Antrieb für diese translatorische Bewegung kommen Elektromotoren, Rollen, Führungen, alleine oder in Kombination in Betracht, insbesondere Abzugswalzen, wie sie mit dem Bezugszeichen 6 angedeutet sind. Bevorzugt wird also der Mähfaden 10 durch Zugwirkung in Richtung F gefördert, wodurch der Kern 1 von einer nicht eingezeichneten Spule abgewickelt und dem Anformmittel 4 zugeführt wird. Insbesondere können Führungen im Anformmittel 4 vorgesehen sein, welchen den Kern 1 mittig in der Röhre halten. Mit den Bögen am Auslass der Extruders 3 wird schematisch der Fluss des Extrudats 22 angedeutet, der sich aufgrund der räumlichen Beschränkung im Anformmittel 4 an den Kern 1 anschmiegt und aufgrund der Röhrenform des Anformmittels 4 eine etwa kreisrunden Umfang aufweist. Das Extrudat 22 härtet in einer nachfolgenden Kühlung 5, z.B**.** einer Wasserkühlung aus, und bildet so die feste Ummantelung 2 um den Kern 1 herum, resultierend also in einem Mähfaden 10 mit Kern und Ummantelung 2. Der so hergestellte und geförderte Mähfaden kann dann von einer Schneidvorrichtung 7 bei einer gewünschten Länge abgeschnitten werden, oder auf eine Aufrollspule aufgerollt werden, und erst später im Handel oder anderswo in der gewünschten Länge von der Aufrollspule abgeschnitten werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Mähfaden,
mit einem Kern (1) enthaltend eine Bastfaser oder eine biologisch abbaubare Chemiefaser (11), und
mit einer Ummantelung (2) um den Kern (1) enthaltend einen biologisch abbaubaren Kunststoff (21),
bei dem der Kern (1) zusätzlich zur Bastfaser oder biologisch abbaubaren Chemiefaser (11) eine Faser (12) aus einem biologisch abbaubaren Kunststoff aufweist,
bei dem die zusätzliche Faser (12) aus einem anderen biologisch abbaubaren Kunststoff hergestellt ist als die biologisch abbaubare Chemiefaser (11)
wobei die Chemiefaser (11), die zusätzliche Faser (12) sowie das Material der Ummantelung nach zumindest einer der Normen EN 13432, EN 14995 oder ASTM D6400 biologisch abbaubar ist.

2. Mähfaden nach Anspruch 1,
bei dem die Bastfaser eine Hanffaser oder eine Flachsfaser ist.

3. Mähfaden nach Anspruch 1,
bei dem die biologisch abbaubare Chemiefaser (11) eine Lyocellfaser ist.

4. Mähfaden nach einem der Ansprüche 1 bis 3,
bei dem die zusätzliche Faser (12) aus demjenigen biologisch abbaubaren Kunststoff hergestellt ist, der auch in der Ummantelung (2) enthalten ist oder aus dem die Ummantelung (2) besteht,
vorzugsweise bei dem die zusätzliche Faser (12) mit der Bastfaser oder mit der biologisch abbaubaren Chemiefaser (11) verzwirnt oder eingeflochten oder verflochten ist,
vorzugsweise bei dem der Anteil der zusätzlichen Faser (12) zur Bastfaser oder zur biologisch abbaubaren Chemiefaser im Verhältnis kleiner oder gleich 1:1 ist, bevorzugt kleiner oder gleich 1:2.

5. Mähfaden nach einem der vorhergehenden Ansprüche,
bei dem die Ummantelung (2) ein biologisch abbaubares Polymermaterial enthält,
vorzugsweise bei dem die Ummantelung (2) aus einem biologisch abbaubaren Polymermaterial besteht oder hergestellt ist,
vorzugsweise bei dem die Ummantelung (2) einen biologisch abbaubaren Polymer-Compound enthält,
vorzugsweise bei dem die Ummantelung (2) aus einem biologisch abbaubaren Polymer-Compound besteht oder hergestellt ist,
vorzugsweise bei dem die Ummantelung zwei oder mehr der folgenden Materialien aufweist: PLA, PBS, TPS, PBAT, PHA, PHB, PCL, Lignin.

6. Mähfaden nach einem der vorhergehenden Ansprüche,
bei dem die Ummantelung (2) Biopolymere, vorzugsweise Polylactide enthält.

7. Mähfaden nach einem der vorhergehenden Ansprüche,
bei dem die Bastfaser oder die biologisch abbaubare Chemiefaser (11) eine Zugfestigkeit aufweist grösser als die Zugfestigkeit der Ummantelung (2).

8. Mähfaden nach einem der vorhergehenden Ansprüche,
bei dem die Ummantelung (2) eine Biege- und / oder Schubsteifigkeit aufweist grösser als die Biege- und / oder Schubsteifigkeit der Bastfaser oder der biologisch abbaubaren Chemiefaser (11).

9. Mähfaden nach einem der vorhergehenden Ansprüche,
bei dem die Ummantelung (2) aus einem extrudierbaren Kunststoff (21) hergestellt ist.

10. Mähfaden nach einem der vorhergehenden Ansprüche,
bei dem die Ummantelung (2) aus einem Kunststoff (21) mit einer Schmelztemperatur grösser 100° C hergestellt ist, vorzugsweise grösser 150° C.

11. Mähfaden nach einem der vorhergehenden Ansprüche,
mit einem Durchmesser (d) des Mähfadens (10) zwischen 1 mm und 4 mm,
vorzugsweise bei dem eine Schichtdicke der Ummantelung (2) zwischen 0.2 mm und 0.4 mm beträgt.

12. Freischneider,
enthaltend einen Mähfaden (10) nach einem der vorhergehenden Ansprüche.

13. Verfahren zum Herstellen eines Mähfadens (10),
bei dem ein Kern (1) enthaltend zumindest eine Bastfaser oder eine biologisch abbaubare Chemiefaser (11) bereitgestellt wird,
bei dem das Bereitstellen des Kerns (1) das Verzwirnen oder Einflechten oder Verflechten einer zusätzlichen Faser (12) aus einem biologisch abbaubaren Kunststoff mit der Bastfaser oder mit der biologisch abbaubaren Chemiefaser (11) umfasst, wobei die zusätzliche Faser (12) aus einem anderen biologisch abbaubaren Kunststoff hergestellt ist als die biologisch abbaubare Chemiefaser (11),
bei dem ein biologisch abbaubarer Kunststoff (21) erhitzt und extrudiert wird, und
bei dem das Extrudat (22) dem Kern (1) zugeführt wird zum Anformen einer Ummantelung (2) für den Kern (1)
wobei die Chemiefaser (11), die zusätzliche Faser (12) sowie das Material der Ummantelung nach zumindest einer der Normen EN 13432, EN 14995 oder ASTM D6400 biologisch abbaubar ist.

14. Verfahren nach Anspruch 13,
bei dem der Kern (1) gefördert wird,
bei dem das Extrudat (22) an einer stationären Position (x) des daran vorbei geführten Kerns (1) diesem zugeführt wird,
bei dem Anformmittel (4) das gleichmässige Anformen des Extrudats (22) an den Kern (1) bewirken,
bei dem die Ummantelung (2) durch ein Aushärten des Extrudats (22) entsteht,
vorzugsweise bei dem der Mähfaden (10) inklusive Kern (1) und ausgehärteter Ummantelung (2) gefördert wird.

15. Verfahren nach Anspruch 13 oder Anspruch 14,
bei dem die zusätzliche Faser (12) aus demselben biologisch abbaubaren Kunststoff wie hergestellt ist, der auch in der Ummantelung (2) enthalten ist oder aus dem die Ummantelung (2) besteht,
vorzugsweise bei dem ein Anteil der zusätzlichen Faser zur Bastfaser oder zur biologisch abbaubaren Chemiefaser (11) im Verhältnis kleiner oder gleich 1:1 ist, bevorzugt kleiner oder gleich 1:2.

## Claims

1. Mowing thread,
comprising a core (1) comprising a bast fibre or a bio-degradable chemical fibre, and
comprising a shell (2) around the core (1) comprising a bio-degradable synthetic material (21),
wherein the core (1) comprises a fibre (12) made from a bio-degradable synthetic material in addition to the bast fibre or in addition to the bio-degradable chemical fibre (11),
wherein the additional fibre (12) is manufactured from a different bio-degradable synthetic material than the bio-degradable chemical fibre (11),
wherein the chemical fibre (11), the additional fibre (12) and the material of the shell is bio-degradable according to at least one of the standards EN 13432, EN 14995 or ASTM D4600.

2. Mowing thread according to claim 1,
wherein the bast fibre is a hemp fibre or a flax fibre.

3. Mowing thread according to claim 1,
wherein the bio-degradable chemical fibre (11) is a Lyocell fibre.

4. Mowing thread according to any of the claims 1 to 3,
wherein the additional fibre (12) is manufactured from the bio-degradable synthetic material the shell (2) consists of or that is comprised in the shell (2),
preferably wherein the additional fibre (12) is twisted or interwoven or interlaced with the bast fibre or with the bio-degradable chemical fibre (11),
preferably wherein a ratio of the additional fibre (12) and the bast fibre or the bio-degradable chemical fibre is smaller than or equal to 1:1, preferably is smaller than or equal to 1:2.

5. Mowing thread according to any of the preceding claims,
wherein the shell (2) comprises a bio-degradable polymer material,
preferably wherein the shell (2) consists of or is made from a bio-degradable polymer material,
preferably wherein the shell (2) comprises a bio-degradable polymer compound,
preferably wherein the shell (2) consists of or is manufactured from a bio-degradable polymer compound,
preferably wherein the shell comprises two or more of the following materials: PLA, PBS, TPS, PBAT, PHA, PHB, PCL, Lignin.

6. Mowing thread according to any of the preceding claims,
wherein the shell (2) comprises biopolymers, preferably polylactide.

7. Mowing thread according to any of the preceding claims,
wherein the bast fibre or the bio-degradable chemical fibre (11) has a tensile strength exceeding a tensile strength of the shell (2).

8. Mowing thread according to any of the preceding claims,
wherein the shell (2) has a flexural stiffness and / or a shear stiffness exceeding the flexural stiffness and /or shear stiffness of the bast fibre or the bio-degradable chemical fibre (11).

9. Mowing thread according to any of the preceding claims,
wherein the shell (2) is manufactured from an extrudable synthetic material (21).

10. Mowing thread according to any of the preceding claims,
wherein the shell (2) is manufactured from a synthetic material (21) having a melting temperature of more than 100° C, preferably more than 150° C.

11. Mowing thread according to any of the preceding claims,
wherein the mowing thread (10) has a diameter (d) between 1 mm and 4 mm,
preferably wherein a layer thickness of the shell (2) is between 0.2 mm and 0.4 mm.

12. String trimmer, comprising
a mowing thread (10) according to any of the preceding claims.

13. Method for manufacturing a mowing thread (10), comprising
wherein a core (1) is provided, the core (1) comprising at least a bast fibre or a bio-degradable chemical fibre (11),
wherein providing the core (1) comprises twisting or interweaving or interlacing an additional fibre (12) with the bast fibre or with the bio-degradable chemical fibre (11), wherein the additional fibre (12) is manufactured from a bio-degradable synthetic material different from the bio-degradable synthetic material than the bio-degradable chemical fibre (11),
wherein a bio-degradable synthetic material (21) is heated and extruded, and
wherein the extrudate (22) is supplied to the core (2) for shaping a shell (2) around the core (1),
wherein the chemical fibre (11), the additional fibre (12) and the material of the shell is bio-degradable according to at least one of the standards EN 13432, EN 14995 or ASTM D4600.

14. Method according to claim 13, comprising
wherein the core (1) is conveyed,
wherein the extrudate (22) is supplied to the core (1) at a stationary position (x), the core (1) passing the stationary position (x),
wherein shaping means (4) effect a uniform forming of the extrudate (22) to the core (1),
wherein the shell (2) is built by hardening the extrudate (22),
preferably wherein the mowing thread (10) including the core (1) and the hardened shell (2) is conveyed.

15. Method according to claim 13 or claim 14,
wherein the additional fibre (12) is manufactured from the same bio-degradable synthetic material the shell (2) consists of or that is comprised in the shell (2),
preferably wherein a ratio of the additional fibre and the portion of the bast fibre or the bio-degradable chemical fibre (11) is less than or equal to 1:1, preferably is less than or equal to 1:2.

## Revendications

1. Fil de coupe,
comportant une âme (1) contenant une fibre libérienne ou une fibre chimique biodégradable (11), et
comportant une gaine (2) entourant l'âme (1) et contenant une matière plastique biodégradable (21),
dans lequel l'âme (1) comporte, en plus de la fibre libérienne ou de la fibre chimique biodégradable (11), une fibre (12) en matière plastique biodégradable,
dans lequel la fibre supplémentaire (12) est fabriquée à partir d'une matière plastique biodégradable différente de celle de la fibre chimique biodégradable (11),
dans lequel la fibre chimique (11), la fibre supplémentaire (12) ainsi que le matériau de la gaine sont biodégradables selon au moins l'une des normes EN 13432, EN 14995 ou ASTM D6400.

2. Fil de coupe selon la revendication 1,
dans lequel la fibre libérienne est une fibre de chanvre ou une fibre de lin.

3. Fil de coupe selon la revendication 1,
dans lequel la fibre chimique biodégradable (11) est une fibre Lyocell.

4. Fil de coupe selon l'une des revendications 1 à 3,
dans lequel la fibre supplémentaire (12) est fabriquée à partir de la matière plastique biodégradable qui est également contenue dans la gaine (2) ou à partir de laquelle la gaine (2) est constituée,
de préférence dans lequel la fibre supplémentaire (12) est retordue, tressée ou entrelacée avec la fibre libérienne ou avec la fibre chimique biodégradable (11), de préférence dans lequel le rapport de la fibre supplémentaire (12) à la fibre libérienne ou à la fibre chimique biodégradable est inférieur ou égal à 1:1, de préférence inférieur ou égal à 1:2.

5. Fil de coupe selon l'une des revendications précédentes,
dans lequel la gaine (2) contient un matériau polymère biodégradable,
de préférence dans lequel la gaine (2) est constituée ou fabriquée à partir d'un matériau polymère biodégradable,
de préférence dans lequel la gaine (2) contient un composé polymère biodégradable,
de préférence dans lequel la gaine (2) est constituée ou fabriquée à partir d'un composé polymère biodégradable,
de préférence dans lequel la gaine comprend deux ou plusieurs des matériaux suivants : PLA, PBS, TPS, PBAT, PHA, PHB, PCL, lignine.

6. Fil de coupe selon l'une des revendications précédentes,
dans lequel la gaine (2) contient des biopolymères, de préférence des polylactides.

7. Fil de coupe selon l'une des revendications précédentes,
dans lequel la fibre libérienne ou la fibre chimique biodégradable (11) présente une résistance à la traction supérieure à la résistance à la traction de la gaine (2).

8. Fil de coupe selon l'une des revendications précédentes,
dans lequel la gaine (2) présente une rigidité à la flexion et/ou au cisaillement supérieure à la rigidité à la flexion et/ou au cisaillement de la fibre libérienne ou de la fibre chimique biodégradable (11).

9. Fil de coupe selon l'une des revendications précédentes,
dans lequel la gaine (2) est fabriquée à partir d'une matière plastique extrudable (21).

10. Fil de coupe selon l'une des revendications précédentes,
dans lequel la gaine (2) est fabriquée à partir d'une matière plastique (21) ayant une température de fusion supérieure à 100 °C, de préférence supérieure à 150 °C.

11. Fil de coupe selon l'une des revendications précédentes,
avec un diamètre (d) du fil de coupe (10) compris entre 1 mm et 4 mm,
de préférence dans lequel une épaisseur de couche de la gaine (2) est comprise entre 0,2 mm et 0,4 mm.

12. Débroussailleuse,
comprenant un fil de coupe (10) selon l'une des revendications précédentes.

13. Procédé de fabrication d'un fil de coupe (10),
dans lequel une âme (1) contenant au moins une fibre libérienne ou une fibre chimique biodégradable (11) est fournie,
dans lequel la mise à disposition de l'âme (1) comprend le retordage, le tressage ou l'entrelacement d'une fibre supplémentaire (12) en matière plastique biodégradable avec la fibre libérienne ou avec la fibre chimique biodégradable (11), la fibre supplémentaire (12) étant fabriquée à partir d'une matière plastique biodégradable différente de celle de la fibre chimique biodégradable (11),
dans lequel une matière plastique biodégradable (21) est chauffée et extrudée, et
dans lequel l'extrudât (22) est amené à l'âme (1) en vue du moulage d'une gaine (2) pour l'âme (1),
dans lequel la fibre chimique (11), la fibre supplémentaire (12) ainsi que le matériau de la gaine sont biodégradables selon au moins l'une des normes EN 13432, EN 14995 ou ASTM D6400.

14. Procédé selon la revendication 13,
dans lequel l'âme (1) est transportée,
dans lequel l'extrudât (22) est amené à l'âme (1), au niveau d'une position stationnaire (x), à mesure qu'elle est guidée au-delà de celle-ci,
dans lequel des moyens de moulage (4) assurent le moulage uniforme de l'extrudât (22) sur l'âme (1),
dans lequel la gaine (2) est formée par durcissement de l'extrudât (22),
de préférence dans lequel le fil de coupe (10), incluant l'âme (1) et la gaine durcie (2), est transporté.

15. Procédé selon la revendication 13 ou la revendication 14,
dans lequel la fibre supplémentaire (12) est fabriquée à partir de la même matière plastique biodégradable que celle contenue dans la gaine (2) ou à partir de laquelle la gaine (2) est constituée,
de préférence dans lequel le rapport de la fibre supplémentaire à la fibre libérienne ou à la fibre chimique biodégradable (11) est inférieur ou égal à 1:1, de préférence inférieur ou égal à 1:2.
